# EUROPEAN PATENT SPECIFICATION

(11) **EP 2 628 622 B1**
(45) Date of publication and mention of the grant of the patent: **13.07.2016**
(21) Application number: 11832394.8
(22) Date of filing: 22.09.2011
(51) Int. Cl.: B60K 15/04, B60K 15/05

(54) **STRUCTURE FOR FUEL FILLER TUBE OPENING**
STRUKTUR FÜR EINE KRAFTSTOFFEINFÜLLSTUTZENÖFFNUNG
STRUCTURE POUR OUVERTURE DE TUBE DE REMPLISSAGE DE CARBURANT

(30) Priority: 14.10.2010 JP 2010231614
(43) Date of publication of application: 21.08.2013
(73) Proprietor: Honda Motor Co., Ltd., Minato-ku Tokyo 107-8556 (JP)
(72) Inventor: NAGAI, Yukihiko, Wako-shi Saitama 351-0193 (JP); YAGI, Shiro, Wako-shi Saitama 351-0193 (JP); OHBA, Atsushi, Wako-shi Saitama 351-0193 (JP)
(74) Representative: Weickmann & Weickmann PartmbB
(86) International application number: PCT/JP2011/071615
(87) International publication number: WO 2012/049956

(56) References cited:
- DE-A1-102005 012 572
- FR-A1- 2 765 836
- FR-A1- 2 800 018
- FR-A1- 2 879 135
- JP-A- 11 245 674
- JP-A- 2002 240 580
- JP-A- 2006 327 236
- JP-A- 2007 196 920
- JP-A- 2009 101 855
- JP-A- 2009 132 242
- JP-U- S5 949 527
- JP-U- 59 049 527
- JP-Y2- 3 006 508
- US-A1- 2009 309 386

## Description

The present invention relates to a fuel filler tube opening structure.

### Background Art

JP 2009-083703 A, for example, discloses a fuel filler tube opening structure that does not use a screw cap for the fuel filler tube opening. In the fuel filler tube opening structure disclosed in JP 2009-083703 A, a plate-shaped opening/closing valve provided within the fuel filler tube opening is normally pressed toward an edge of the fuel filler tube opening, and after a fuel lid is opened, the opening/closing valve can be opened by being pushed by a fuel filling gun from outside the fuel filler tube opening. Thus, fuel-filling operation to insert a fuel filling gun into the fuel filler tube opening can be facilitated. With the fuel filler tube opening structure disclosed in JP 2009-083703 A, however, the upper surface of the plate-shaped opening/closing valve and the edge of the fuel filler tube opening tend to collect dust, water, etc. and, even if the dust, water, etc. is wiped, the dust, water, etc. still remaining on the opening/closing valve and the fuel filler tube opening edge would drop into the fuel filler tube opening as the opening/closing valve is pushed open by the fuel filling gun.

If a lid for the fuel filler tube opening is provided integrally with a fuel lid, dust can be prevented from being collected on the opening/closing valve. But, as the time passes after the fuel lid is closed, there would occur a possibility of the lid (protective cover) undesirably sticking to the fuel filler tube opening edge.

US 2009/309386 A1 shows a fuel filter tube opening structure in accordance with the preamble of claim 1.

### Summary of Invention

### Technical Problem:

It is therefore an object to provide a fuel filler tube opening structure which can not only prevent dust, water, etc. entering the fuel filler tube opening but also prevent the protective cover from sticking to the fuel filler tube opening.

### Solution to Problem:

The invention provides a fuel filler tube opening structure in accordance with claim 1.

Preferably, in the invention recited in claim 2, the protective cover is formed of resin, as a separate component from the fuel lid.

Preferably, in the invention recited in claim 3, the flange portion is formed along the entire periphery of the protective cover.

Preferably, in the invention recited in claim 4, the protective cover is mounted to a cover fixation section that is fixed to the fuel lid, and a cut-and-bent or lanced tab for engaging with the cover fixation section is formed on the protective cover below the fuel filler tube opening.

Preferably, in the invention recited in claim 5, the fuel adaptor has a drain hole formed therein below the fuel filler tube opening, and the protective cover is disposed above the drain hole.

### Advantageous Effects of Invention:

In the fuel filler tube opening structure of the invention recited in claim 1, the protective cover provided on the inner surface of the fuel lid surrounds the insertion opening portion of the fuel filler tube opening in spaced relation to the insertion opening portion. Thus, the fuel filler tube opening structure of the invention can not only prevent minute foreign substances, such as dust, from entering the fuel filler tube opening but also prevent the protective cover from sticking to the insertion opening portion of the fuel filler tube opening.

Further, in the fuel filler tube opening structure of the invention recited in claim 1, the fuel filler tube opening is oriented obliquely upward with respect to the vehicle, the protective cover has an eave section extending to a region above the fuel filler tube opening, and the eave section has a flange portion formed on an edge portion thereof and bent from the edge portion radially outward of the protective cover. Thus, even when water, such as rain or vehicle washing water, has traveled from above onto an upper portion of the protective cover, such water is stopped by the flange portion. Namely, even when water has traveled to the protective cover, the present invention can reliably prevent the water from reaching the fuel filler tube of the fuel filler tube opening and the insertion opening portion of the fuel filler tube opening.

The fuel filler tube opening includes the lid ring section formed on an edge portion of the fuel filler tube opening and the stepped section formed integrally with the lid ring section, and the stepped section has the insertion opening portion for fuel filling therethrough. Thus, in case water drops from the protective cover to near the insertion opening portion, the dropped water is directed downward along the stepped section, and thus, the dropped water does not reach the insertion opening portion. Namely, even when water has flown beyond the protective cover to reach the fuel filler tube opening, the water can be reliably prevented, by the stepped section, from reaching the insertion opening portion of the fuel filler tube opening.

Further, in the fuel filler tube opening structure of the invention recited in claim 2, the protective cover is formed of resin, as a separate component from the fuel lid. Thus, manufacturing of the protective cover can be facilitated, and besides, the protective cover can be easily formed in a desired shape corresponding to a layout of components around the protective cover and a shape of the fuel filler tube opening.

Further, in the invention recited in claim 3, the flange portion is formed along the entire periphery of the protective cover. Thus, the present invention allows the flange portion to guide and discharge water downwardly of the fuel filler tube opening.

Further, in the invention recited in claim 4, the protective cover is mounted to a cover fixation section that is fixed to the fuel lid, and the lanced tab for engaging with the cover fixation section is formed on the protective cover below the fuel filler tube opening. Thus, even if water has traveled via the lanced tab of the cover fixation section, the water would never reach the fuel filler tube of the fuel filler tube opening and the insertion opening portion of the fuel filler tube opening.

Furthermore, in the invention recited in claim 5, the fuel adaptor has a drain hole formed therein below the fuel filler tube opening, and the protective cover is disposed above the drain hole. Thus, the present invention can prevent minute foreign substances, such as dust having entered through the drain hole, from reaching the fuel filler tube through the insertion opening portion of the fuel filler tube opening. Particularly, in a case where a drain tube is not connected to the drain hole, the present invention can prevent minute foreign substances, such as dust, from reaching the interior of the fuel filler tube opening.

### Brief Description of Drawings:

Fig. 1 is a side view showing a rear section of a vehicle employing an embodiment of a fuel filler tube opening structure of the present invention;
Fig. 2 is an enlarged sectional view taken along line 2 - 2 of Fig. 1;
Fig. 3 is a perspective view showing relationship between a fuel filler tube opening and a protective cover of the fuel filler tube opening structure;
Fig. 4 is a perspective view of the protective cover of the fuel filler tube opening structure;
Fig. 5 is a sectional view showing a fuel lid and a cut-and-bent or lanced tab of the fuel filler tube opening structure; and
Fig. 6 is a sectional view of a fuel adaptor of the fuel filler tube opening structure.

### Description of Embodiments:

A description will be given about embodiments of the present invention with reference to the accompanying drawings.

### Embodiment

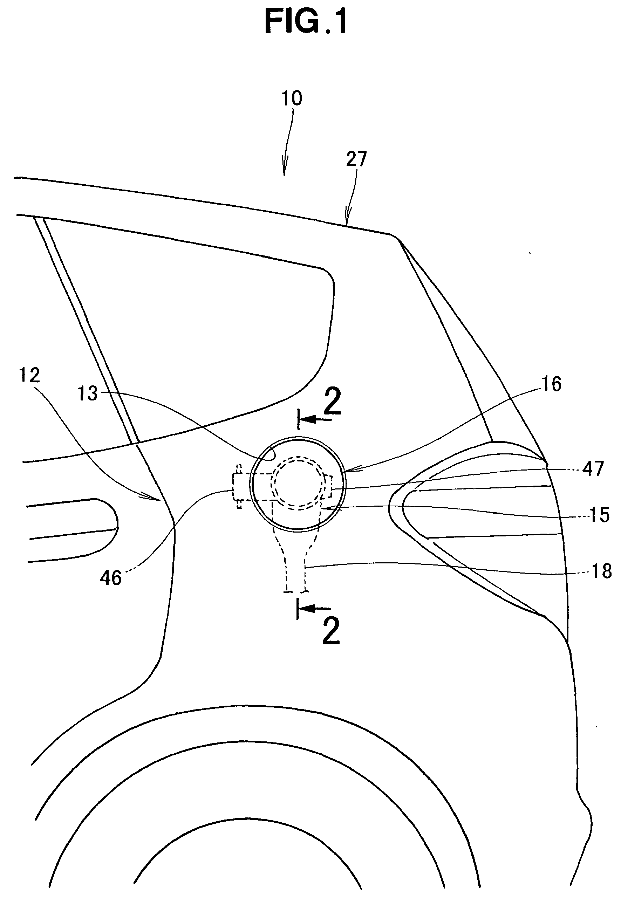

As shown in Fig. 1, an embodiment of a fuel filler tube opening structure of the present invention is employed in a vehicle 10. A fuel filler tube opening 15 is provided in communication with an opening section 13 formed in a side body 12 of a vehicle body 27. The opening section 13 is covered with a fuel lid 16 that is movable to open or close the opening section 13 via a hinge 46 provided on the side body 12. The fuel filler tube opening 15 comprises a fuel lid 16 and a mouthpiece 20 of a fuel filler tube 18.

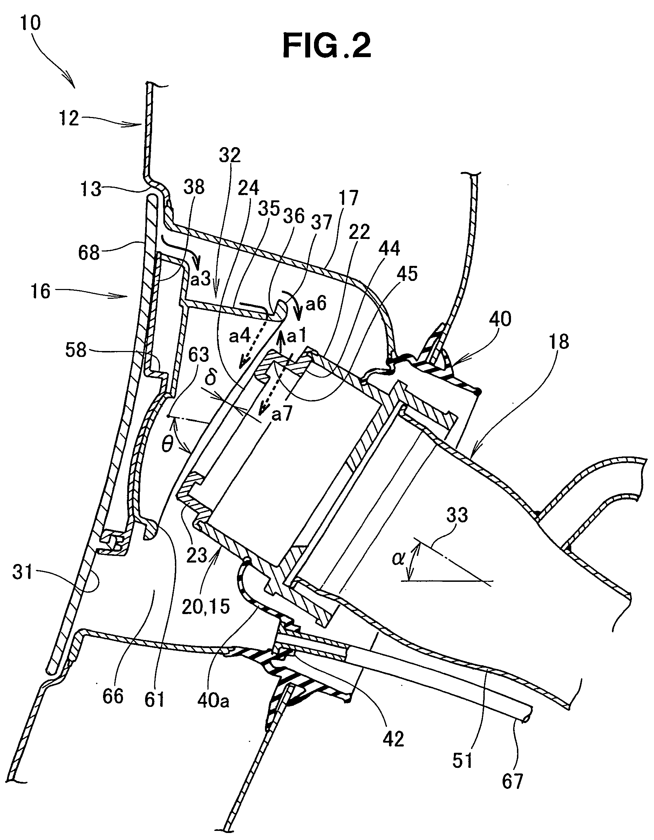

As shown in Fig. 2, the fuel introduction tube 18 comprises a feeder tube 51, and the mouthpiece 20 provided at one end of the feeder tube 51. The mouthpiece 20 constitutes the fuel filler tube opening 15. The other end of the feeder tube 51 is in communication with a not-shown fuel tank.

A tubular fuel adaptor 17 projecting toward the interior of the vehicle body is mounted at its one end edge portion to the opening section 13. The mouthpiece 20 is disposed in an opening portion of the fuel adaptor 17 at and near the other end of the fuel adaptor 17.

The mouthpiece 20 comprises a first mouthpiece 23 and a second mouthpiece 22. The second mouthpiece 22 is fitted over one end portion of the feeder tube 51, and the first mouthpiece 23 is mounted on a distal end portion of the second mouthpiece 22.

When the fuel lid 16 is opened, fuel can be fed to the fuel introduction tube 18. When the fuel lid 16 is closed, the fuel lid 16 is located close to the first mouth piece 23 mounted on the second mouth piece 22 and functions as a lid for the fuel filler tube opening 15. Within the feeder tube 51 is provided an opening/closing valve of a known type that opens only as a not-shown fuel filling gun is inserted into the fuel filler tube opening 15.

The embodiment of the fuel filler tube opening structure of the present invention comprises the fuel adaptor 17 disposed inside the vehicle body 27 and supported on the vehicle body 27, and the fuel lid 16 for freely openably closing the opening section 13 formed in the vehicle body 27 having the fuel adaptor 17 supported thereon.

The fuel lid 16 includes a tubular protective cover 32 provided on the inner surface 31 of the fuel lid 16. The inner end of the protective cover 32 is spaced, in an axial direction of the fuel introduction tube 18, from the distal end of the first mouthpiece 23 by a distance δ. The inner diameter at the inner end of the protective cover 32 is greater than the outer diameter of the first and second mouthpieces 23 and 22. Namely, the inner end of the protective cover 32 extends short of the outer periphery of the second mouthpiece 22.

As another embodiment of the present invention, the inner end of the protective cover 32 may extend to the outer periphery of the second mouthpiece 22 so as to surround the outer periphery of the second mouthpiece 22.

The protective cover 32 is formed of resin, as a separate component from the fuel lid 16, by means of a mold attached to an injection molding machine.

The fuel introduction tube 18 has a longitudinal axis 33 extending obliquely upward with an inclination angle α relative to the horizontal line. A depth of the fuel filler tube opening 15 corresponds to a distance through which a fuel filling gun of a gas station has to be inserted to reach the fuel introduction tube 18.

The protective cover 32 has an eave section 35 extending to a region immediately above the first mouthpiece 23 (i.e., a region spaced from the first mouthpiece 23 in a direction of arrow a1). The eave section 35 has a flange portion 37 formed on its edge portion 36 and bent from the edge portion 36 to extend radially outward of the eave section 35. The flange portion 37 is formed along the entire periphery of the eave section 35.

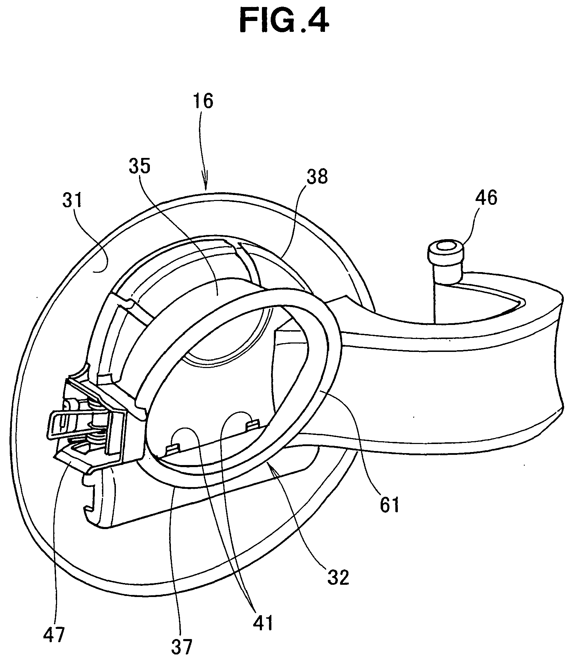

The protective cover 32 is mounted to the fuel lid 16 via a cover fixation section 38 that is fixed to the fuel lid 16. The fuel lid 16 has cut-and-bent or lanced tabs 41 (Fig. 4) formed to allow the cover fixation section 38 to be engaged by the fuel lid 16. The lanced tabs 41 are located lower than the first mouthpiece 23.

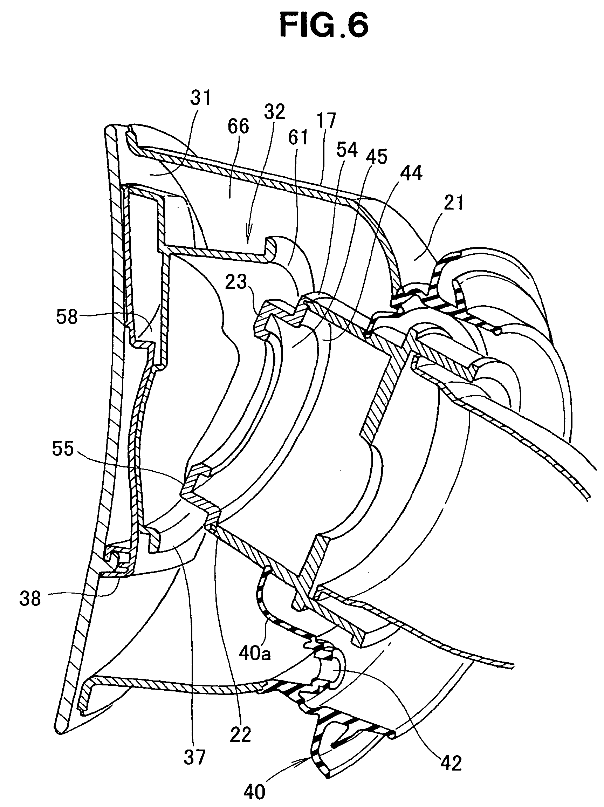

As shown in Figs. 2 and 6, the fuel adaptor 17 is supported on the vehicle body 27 (Fig. 1) via an elastic member 40. As the fuel filling gun is inserted into the fuel filler tube opening 15, the elastic member 40 elastically deforms to adjust itself in the length direction of the fuel filling gun. The mouth piece 20, more specifically the second mouth piece 22, is freely movably supported by a tongue portion 40a of the elastic member 40. Namely, as the fuel filling gun is inserted, the first and second mouthpieces 23 and 22 are freely movable to adapt to an inserted angle of the fuel filling gun.

The elastic member 40 has a drain hole 42 formed therein, and the protective cover 32 is located higher than the drain hole 42.

The first mouthpiece 23 has a lid ring section 44 as a base section mounted to the distal end portion of the second mouthpiece 22, and a stepped section 45 projecting from the inner end of the lid ring section 44 toward the protective cover 32 and then extending toward the center of the lid ring section 44. The stepped section 45 has a fuel-filling-gun insertion opening portion 24 for fuel filling through the fuel filler tube opening 15.

As shown in Figs. 2 and 4, the protective cover 32 is provided close to and parallel to the insertion opening portion 24 with the distance δ from the latter. The fuel lid 16 is supported by the hinge 46. Reference numeral 47 represents a lock device for the fuel lid 16.

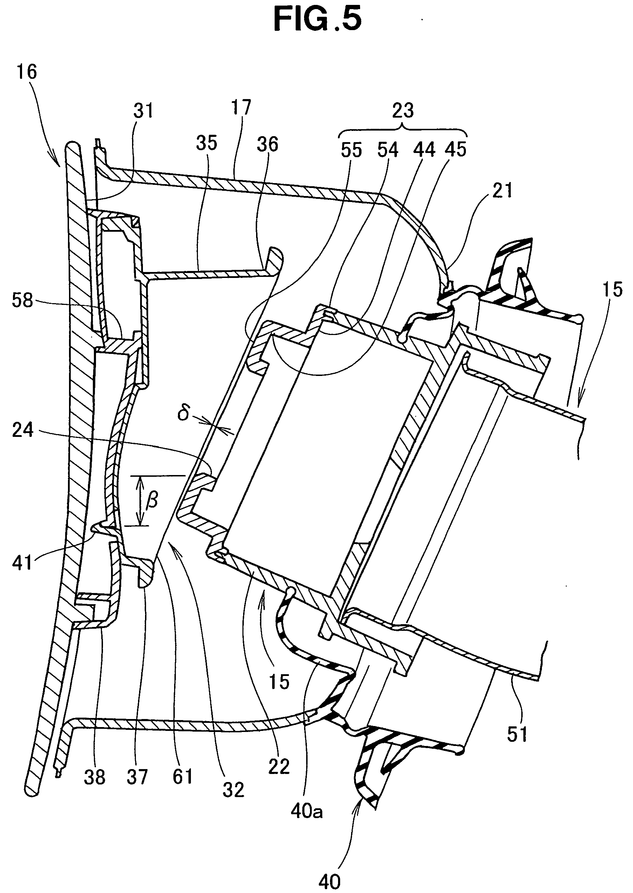

As shown in Fig. 5, the first mouthpiece 23 is an inflow preventing ring member for preventing water from flowing into the feeder tube 51 via the second mouthpiece 22. This inflow preventing ring member 23 comprises the aforementioned lid ring section 44 and stepped section 45. More specifically, the inflow preventing ring member 23 includes a fitting section 54 fitted over the distal end portion of the second mouthpiece 22, and this fitting section 54 is formed on and along the outer peripheral end of the lid ring section 44.

The first mouthpiece 23 further has a flat section 55 formed continuously or integrally with the stepped section 45 in opposed relation to the fuel adaptor 17. The insertion opening portion 24 for permitting insertion of the fuel filling gun is formed in the flat section 55.

The cover fixation section 38 provided on the inner surface 31 of the fuel lid 16 has a cover support portion 58. The eave section 35 of the protective cover 32 mounted to the cover fixation section 38 has a radius greater than a radius of the insertion opening portion 24 of the first mouthpiece 23 and an inner radius of the second mouthpiece 22. The radius of the insertion opening portion 24 is smaller than the inner radius of the second mouthpiece 22.

The eave section 35 has a cover distal end portion 61 formed parallel to the flat section 55 of the first mouthpiece 23 and the distal end portion of the second mouthpiece 22. As shown in Fig. 2, the cover distal end portion 61 is inclined by an angle θ relative to the axis line 63 of the eave section 35.

The flange portion 37 formed integrally with the cover distal end portion 61 lies parallel to the flat section 55 of the first mouthpiece 23 and the distal end portion of the second mouthpiece 22. Differences between the cover distal end portion 61 and the edge portion 36 of the eave section 35 are that the edge portion 36 has a length parallel to the axis line 63 from the cover distal end portion 61 and that the cover distal end portion 61 is a distal end surface spaced from the flat section 55 of the first mouthpiece 23 by the distance δ.

As shown in Fig. 5, the lanced tabs 41 of the protective cover 32 are formed at positions lower than the insertion opening portion 24 by a distance β and held in engagement with the cover support portion 58 of the fixation section 38.

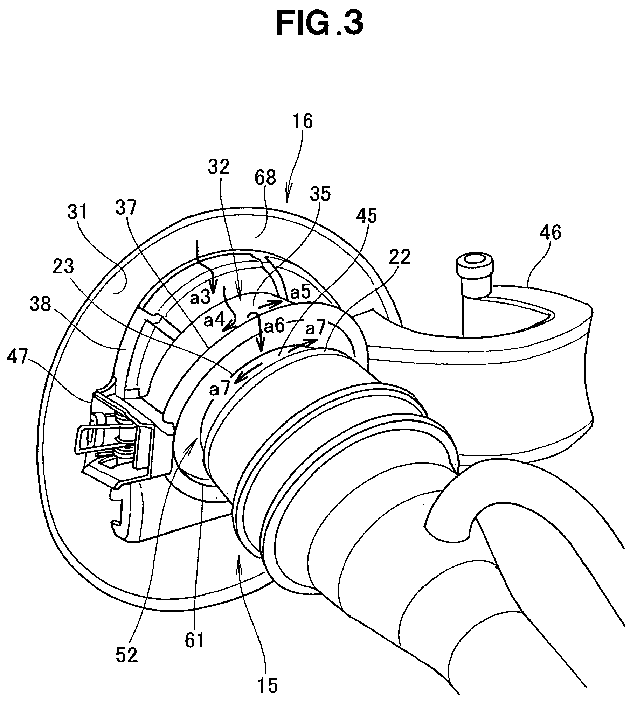

Further, as shown in Figs. 2 and 3, when the lock device for the fuel lid 16 is in a locked position, the cover distal end portion 61 of the protective cover 32 covers the insertion opening portion 24 of the first mouthpiece 23 while maintaining the distance or gap δ.

Because dust is collected on the protective cover 32 during the time when dust settles down from a floating state in a space 66 defined between the fuel lid 16 and the fuel adaptor 17, it would be difficult for the dust to enter the insertion opening portion 24 through the gap δ between the protective cover 32 and the insertion opening portion 24 of the first mouthpiece 23.

If water, such as rain or vehicle washing water, enters through a gap between the fuel lid 16 and the opening section 13 of the side body 12, it is directed through the drain hole 42 to be discharged via a drain tube 67.

Further, as shown in Figs, 2 and 3, if water flows from an upper portion 68 of the fuel lid 16 to the protective cover 32 as indicated by arrow a3, the water would be stopped by the flange portion 37 without flowing as indicated by arrow a4. As a consequence, the flange portion 37 directs the water downward, and thus, the water can be prevented from flowing to the insertion opening portion 24 of the first mouth piece 23 and to the opening of the second mouthpiece 22 and from dropping down.

In case water having traveled to the protective cover 32 drops from the protective cover 32 to near the second mouthpiece 22 and the insertion opening portion 24, the dropped water is directed downward along the stepped section 45 as indicated by arrow a7; thus, the dropped water does not reach the stepped section 45. Namely, even when water has flown beyond the protective cover 32 to reach the mouthpiece 20 as indicated by arrow a6, the water is directed along the stepped section 45 as indicated by arrow a7, and thus, the water can be reliably prevented from reaching the opening of the second mouthpiece 22 and the insertion opening portion 24 of the first mouthpiece 23.

### Industrial Applicability

The fuel filler tube opening structure of the present invention is well suited for application to motor vehicles.

### Legend:

11 ... vehicle, 13 ... opening section, 15 ... fuel filler tube opening, 16 ... fuel lid, 17 ... fuel adaptor, 18 ... fuel introduction tube, 20 ... mouthpiece, 22 ... second mouthpiece, 23 ... first mouthpiece, 24 ... insertion opening portion, 27 ... vehicle body, 31 ... inner surface of the fuel lid, 32 ... protective cover, 35 ... eave section, 36 ...edge portion of the eave section, 37 ... flange portion, 38 ... cover fixation section, 41 ... lanced tab, 42 ... drain hole, 44 ... lid ring section, 45 ... stepped section, δ ... spaced apart distance

## Claims

1. A fuel filler tube opening structure comprising:
a fuel adaptor (17) supported on a vehicle body (12) of a vehicle (11) and disposed inside the vehicle body;
a fuel lid (16) for openably closing an opening section (13) formed in the vehicle body (12) having the fuel adaptor (17) supported thereon;
and
a protective cover (32) provided on an inner surface of the fuel lid (16),
wherein the protective cover (32) surrounds an insertion opening portion (24) of a mouthpiece (20), constituting a fuel filler tube opening (15), in spaced relation to the insertion opening portion (24) to thereby prevent the protective cover (32) from sticking to the insertion opening portion (24), and
the protective cover (32) has an eave section (35) extending to a region above the fuel filler tube opening (15),
**characterized in that**
the fuel filler tube opening (15) is oriented obliquely upward with respect to the vehicle (11);
the eave section (35) has a flange portion (37) formed on an edge portion (36) thereof and bent from the edge portion (36) radially outward of the protective cover (32),
the mouthpiece (20) comprises a first mouthpiece (23), and a second mouthpiece (22), the second mouthpiece (22) being fitted over one end portion of a feeder tube (51) and being freely movably supported by a tongue portion 40a of an elastic member (40), which supports the fuel adapter (17) on the vehicle body (27);
the first mouthpiece (23) has a lid ring section (44) as a base section mounted to the distal end portion of the second mouthpiece (22), and a stepped section (45) projecting from the inner end of the lid ring section (44) toward the protective cover (32) and then extending toward the center of the lid ring section (44), wherein the stepped section (45) has the insertion opening portion (24); and
the lid ring section (44) has a fitting section (54) formed on an outer peripheral end thereof, the fitting section (54) fitting over a distal end portion of the second mouthpiece (22)..

2. The fuel filler tube opening structure according to claim 1, wherein the protective cover (32) is formed of resin, as a separate component from the fuel lid (16).

3. The fuel filler tube opening structure according to claim 1, wherein the flange portion (37) is formed along an entire periphery of the protective cover (32).

4. The fuel filler tube opening structure according to any one of claims 1 to 3, wherein the protective cover (32) is mounted to a cover fixation section (38) that is fixed to the fuel lid (16), and a lanced tab (41) for engaging with the cover fixation section (38) is formed on the protective cover (32) below the fuel filler tube opening (15).

5. The fuel filler tube opening structure according to any one of claims 1 to 4, wherein the fuel adaptor (17) has a drain hole (42) formed therein below the fuel filler tube opening (15), and
wherein the protective cover (32) is disposed above the drain hole (42).

## Patentansprüche

1. Kraftstoffeinfüllrohr-Öffnungsstruktur, welche aufweist:
einen Kraftstoffadapter (17), der an einer Fahrzeugkarosserie (12) eines Fahrzeugs (11) getragen ist und innerhalb der Fahrzeugkarosserie angeordnet ist;
einen Kraftstoffdeckel (16) zum öffenbaren Schließen eines in der Fahrzeugkarosserie (12) ausgebildeten Öffnungsabschnitts (13), und an dem der Kraftstoffadapter (17) getragen ist; und
einen Schutzdeckel (32), der an einer Innenoberfläche des Kraftstoffdeckels (16) vorgesehen ist,
wobei der Schutzdeckel (32) einen Einführöffnungsabschnitt (24) eines Mundstücks (20), das eine Kraftstoffeinfüllrohröffnung (15) darstellt, in Abstandsbeziehung zu dem Einführöffnungsabschnitt (24) umgibt, um hierdurch zu verhindern, dass der Schutzdeckel (32) an dem Einführöffnungsabschnitt (24) anhaftet, und
der Schutzdeckel (32) einen Vordachabschnitt (35) aufweist, der sich zu einem Bereich oberhalb der Kraftstoffeinfüllrohröffnung (15) erstreckt,
**dadurch gekennzeichnet, dass**
die Kraftstoffeinfüllrohröffnung (15) in Bezug auf das Fahrzeug (11) schräg aufwärts orientiert ist;
der Vordachabschnitt (35) einen Flanschabschnitt (37) aufweist, der an seinem Randabschnitt (36) ausgebildet ist und von dem Randabschnitt (36) radial auswärts des Schutzdeckels (32) gebogen ist,
das Mundstück (20) ein erstes Mundstück (23) und ein zweites Mundstück (22) aufweist, wobei das zweite Mundstück (22) auf einen Endabschnitt eines Zuführrohrs (51) aufgesetzt ist und durch einen Zungenabschnitt (40a) eines elastischen Elements (40) frei beweglich getragen ist, das den Kraftstoffadapter (17) an der Fahrzeugkarosserie (27) hält,
das erste Mundstück (23) einen Deckelringabschnitt (44) als Basisabschnitt aufweist, der an dem distalen Endabschnitt des zweiten Mundstücks (22) angebracht ist, sowie einen gestuften Abschnitt (45),
der vom Innenende des Deckelringabschnitts (44) zum Schutzdeckel (32) vorsteht und sich dann zur Mitte des Deckringabschnitts (44) erstreckt, wobei der gestufte Abschnitt (45) den Einführöffnungsabschnitt (24) aufweist; und
der Deckelringabschnitt (44) einen Sitzabschnitt (54) aufweist, der an seinem Außenumfangsende ausgebildet ist, wobei der Sitzabschnitt (54) auf einen distalen Endabschnitt des zweiten Mundstücks (22) aufgesetzt ist.

2. Die Kraftstoffeinfüllrohr-Öffnungsstruktur nach Anspruch 1, wobei der Schutzdeckel (32), als vom Kraftstoffdeckel (16) separate Komponente, aus Kunststoff gebildet ist.

3. Die Kraftstoffeinfüllrohr-Öffnungsstruktur nach Anspruch 1, wobei der Flanschabschnitt (37) entlang einem gesamten Umfang des Schutzdeckels (32) ausgebildet ist.

4. Die Kraftstoffeinfüllrohr-Öffnungsstruktur nach einem der Ansprüche 1 bis 3, wobei der Schutzdeckel (32) an einem Deckelbefestigungsabschnitt (38) angebracht ist, der am Kraftstoffdeckel (16) befestigt ist, und eine zugespitzte Zunge (41) zum Eingriff mit dem Deckelbefestigungsabschnitt (38) an dem Schutzdeckel (32) unter der Kraftstoffeinfüllrohröffnung (15) ausgebildet ist.

5. Die Kraftstoffeinfüllrohr-Öffnungsstruktur nach einem der Ansprüche 1 bis 4, wobei der Kraftstoffadapter (17) ein Ablaufloch (42) aufweist, das darin unterhalb der Kraftstoffeinfüllrohröffnung (15) ausgebildet ist, und wobei der Schutzdeckel (32) über dem Ablaufloch (42) angeordnet ist.

## Revendications

1. Structure d'ouverture de tuyau de remplissage de carburant comprenant :
un adaptateur de carburant (17) supporté sur une carrosserie de véhicule (12) d'un véhicule (11) et disposé à l'intérieur de la carrosserie de véhicule ;
un couvercle de carburant (16) permettant de fermer avec faculté d'ouverture une section d'ouverture (13) formée dans la carrosserie de véhicule (12) sur laquelle est supporté l'adaptateur de carburant (17) ; et
un capuchon de protection (32) prévu sur une surface interne du couvercle de carburant (16),
dans laquelle le capuchon de protection (32) entoure une portion d'ouverture d'insertion (24) d'un embout (20), constituant une ouverture de tuyau de remplissage de carburant (15), en relation espacée par rapport à la portion d'ouverture d'insertion (24) pour empêcher ainsi le capuchon de protection (32) d'adhérer à la portion d'ouverture d'insertion (24), et
le capuchon de protection (32) comporte une section d'avancée (35) s'étendant vers une région au-dessus de l'ouverture de tuyau de remplissage de carburant (15),
**caractérisée en ce que**
l'ouverture de tuyau de remplissage de carburant (15) est orientée à l'oblique vers le haut par rapport au véhicule (11) ;
la section d'avancée (35) comporte une portion de bride (37) formée sur une portion de bord (36) de celle-ci et courbée à partir de la portion de bord (36) radialement vers l'extérieur du capuchon de protection (32),
l'embout (20) comprend un premier embout (23), et un second embout (22), le second embout (22) étant ajusté sur une portion d'extrémité d'un tuyau d'alimentation (51) et étant supporté de manière librement mobile par une portion de languette (40a) d'un organe élastique (40), qui supporte l'adaptateur de carburant (17) sur la carrosserie de véhicule (27) ;
le premier embout (23) comporte une section de bague de couvercle (44) en tant que section de base montée sur la portion d'extrémité distale du second embout (22), et une section étagée (45) faisant saillie à partir de l'extrémité interne de la section de bague de couvercle (44) vers le capuchon de protection (32) puis s'étendant vers le centre de la section de bague de couvercle (44), la section étagée (45) comportant la portion d'ouverture d'insertion (24) ; et
la section de bague de couvercle (44) comporte une section d'ajustement (54) formée sur une extrémité périphérique externe de celle-ci, la section de raccord (54) s'ajustant sur une portion d'extrémité distale du second embout (22).

2. Structure d'ouverture de tuyau de remplissage de carburant selon la revendication 1, dans laquelle le capuchon de protection (32) est composé de résine, sous forme de composant séparé du couvercle de carburant (16).

3. Structure d'ouverture de tuyau de remplissage de carburant selon la revendication 1, dans laquelle la portion de bride (37) est formée le long d'une périphérie entière du capuchon de protection (32).

4. Structure d'ouverture de tuyau de remplissage de carburant selon l'une quelconque des revendications 1 à 3, dans laquelle le capuchon de protection (32) est monté sur une section de fixation de capuchon (38) qui est fixée au couvercle de carburant (16), et une patte percée (41) pour une mise en prise avec la section de fixation de capuchon (38) est formée sur le capuchon de protection (32) en dessous de l'ouverture de tuyau de remplissage de carburant (15).

5. Structure d'ouverture de tuyau de remplissage de carburant selon l'une quelconque des revendications 1 à 4, dans laquelle l'adaptateur de carburant (17) comporte un orifice de vidange (42) formé à l'intérieur en dessous de l'ouverture de tuyau de remplissage de carburant (15), et
dans laquelle le capuchon de protection (32) est disposé au-dessus de l'orifice de drainage (42).
